# FASCICULE DE BREVET EUROPEEN

(11) **EP 3 394 141 B1**
(45) Date de publication et mention de la délivrance du brevet: **09.11.2022**
(21) Numéro de dépôt: 16826410.9
(22) Date de dépôt: 20.12.2016
(51) Int. Cl.: C08G 18/72, C08G 18/76, C08G 18/12, C08G 18/48, C08L 75/08

(54) **POLYURETHANE A TERMINAISON XDI ET COMPOSITION COMPRENANT LEDIT POLYURETHANE**
XDI-TERMINIERTES POLYURETHAN UND ZUSAMMENSETZUNG MIT DIESEM POLYURETHAN
XDI-TERMINATED POLYURETHANE, AND COMPOSITION COMPRISING SAID POLYURETHANE

(30) Priorité: 21.12.2015 FR 1562991
(43) Date de publication de la demande: 31.10.2018
(73) Titulaire: BOSTIK SA, 92700 Colombes (FR)
(72) Inventeur: SANZ, Federico, 60750 Choisy Au Bac (FR)
(74) Mandataire: Arkema Patent
(86) Numéro de dépôt international: PCT/FR2016/053573
(87) Numéro de publication internationale: WO 2017/109382

(56) Documents cités:
- EP-A1- 1 524 296
- EP-A1- 2 949 676
- JP-A- H 101 607

## Description

### DOMAINE DE L'INVENTION

La présente invention concerne un nouveau prépolymère polyuréthane réactif dont les terminaisons isocyanates (NCO) sont issues de la réaction entre du méta-xylylène diisocyanate (XDI) et un prépolymère polyuréthane à terminaisons hydroxyles (OH).

La présente invention concerne également l'utilisation dudit polyuréthane pour fabriquer une composition adhésive, de mastic et/ou de revêtement de surface, notamment pour le domaine de la construction, qui soit stable dans le temps en termes de viscosité.

La présente invention concerne également une composition adhésive, de mastic et/ou de revêtement de surface comprenant le prépolymère polyuréthane selon l'invention.

### ARRIERE-PLAN TECHNOLOGIQUE

Pour répondre au besoin du plus grand nombre, on cherche à mettre au point des compositions de revêtement de surface, de mastic et d'adhésif utilisables ou applicables à basse température (entre 5 et 35°C) et notamment à température ambiante (23°C).

De nombreuses compositions de revêtement de surface, de mastic et d'adhésif disponibles sur le marché sont fabriquées à partir de polyuréthanes réactifs à base de MDI (diisocyanate de diphényl-méthylène), possédant notamment des groupes isocyanates terminaux qui réticulent en présence d'humidité.

Toutefois, ces compositions présentent en général l'inconvénient de comporter des teneurs résiduelles importantes en MDI provenant de la réaction de synthèse du polyuréthane, susceptibles de conduire à un certain nombre d'inconvénients, notamment des problèmes de toxicité.

La préparation de polyuréthanes à terminaisons NCO à base de MDI se fait traditionnellement par réaction d'un polyol avec un excès stœchiométrique de MDI. Cet excès stœchiométrique peut être traduit par un rapport molaire NCO/OH (noté « rapport NCO/OH ») strictement supérieur à 1, qui correspond au rapport molaire du nombre de groupes isocyanates (NCO) sur le nombre de groupes hydroxyles (OH) portés par les espèces réactives porteuses de telles fonctions, utilisées dans la préparation du polyuréthane. Ledit excès stœchiométrique est nécessaire à l'obtention de groupes isocyanates terminaux sur le polyuréthane. Selon le rapport molaire NCO/OH choisi, le polyuréthane synthétisé est obtenu avec un excédent plus ou moins important de monomère MDI résiduel, correspondant au monomère MDI non réagi en fin de réaction.

Afin de réduire les inconvénients liés à la présence d'une teneur élevée en MDI, des recherches ont été menées pour synthétiser des polyuréthanes à terminaisons NCO à base de MDI avec un minimum de monomère MDI résiduel.

Cependant, il a été observé que les compositions de polyuréthane possédant une teneur en monomère MDI inférieure ou égale à 1% en poids par rapport au poids de la composition de polyuréthane, sont hautement visqueuses à température ambiante et présentent des problèmes de stabilité dans le temps en termes de viscosité.

En effet, ces compositions de polyuréthane à faible teneur en monomère MDI ont une durée de vie limitée au stockage et voient leur viscosité augmenter rapidement au cours du temps, jusqu'à devenir trop visqueuses pour pouvoir être formulées sous la forme d'une composition de revêtement de surface, d'une composition adhésive ou d'une composition de mastic, utilisable ou applicable à basse température (5-35°C), et notamment à température ambiante (23°C).

Il est connu d'utiliser des diluants tel que des solvants organiques hydrocarbonés ou des plastifiants pour diminuer la viscosité de compositions de polyuréthane à terminaisons NCO à faible teneur en monomère diisocyanate résiduel. Toutefois, ces diluants présentent l'inconvénient de devoir être utilisés dans des quantités importantes, ce qui n'est généralement pas souhaité. En outre, ces diluants ne permettent pas de stabiliser efficacement l'évolution de viscosité de telles compositions de polyuréthane, notamment sur le long terme.

Alternativement, il a été proposé dans la demande de brevet WO 2011/051019, d'ajouter un ester d'acide monocarboxylique ou dicarboxylique en C₂-C₂₄ pour diminuer la viscosité d'une composition de polyuréthane à terminaisons NCO à faible teneur en monomère diisocyanate résiduel. Dans les exemples, il a été démontré qu'en ajoutant 5 à 6% en poids d'un ester particulier dans une composition de polyuréthane à terminaisons NCO à base de TDI (diisocyanate de toluène) à faible teneur en monomère TDI résiduel, la viscosité de la composition n'évoluait plus ou quasiment plus dans le temps au bout d'une semaine à 40°C.

JP H10 1607 A divulgue la préparation d'un polyuréthane à terminaisons xylylène diisocyanate (XDI) à partir de XDI et d'un mélange de polypropylène glycol et de polypropylène triol. EP 1 524 296 A1 divulgue des compositions à base de polyuréthanne pouvant être utilisées comme mastic. Le polyuréthane à terminaison XDI est obtenu par réaction de XDI en excès avec du polypropylène glycol. EP 2 949 676 A1 divulgue des compositions de polyuréthane à terminaisons NCO à base de diisocyanate de diphényle méthane (MDI) non thermofusible et à faible teneur en monomère MDI issu de la synthèse dudit polyuréthane, comprenant au moins un composé isocyanate de volume molaire inférieur ou égal à 300 millilitres par mol, choisi(s) parmi le XDI, HMDI et IPDI.

Toutefois, l'efficacité de cette stabilisation reste à améliorer, notamment au vu des quantités d'agent stabilisant utilisées et/ou de la durée de stabilisation.

Par ailleurs, aucun effet stabilisant n'a été démontré sur des compositions de polyuréthane à terminaisons NCO à base de MDI à faible teneur en monomère MDI résiduel, ces dernières étant généralement plus instables en terme de viscosité que les compositions à base de polyuréthane à terminaisons NCO à base de TDI à faible teneur en TDI résiduel.

Ainsi, il existe un besoin de mettre à disposition un prépolymère polyuréthane permettant l'obtention d'une composition de mastic présentant un faible taux de monomère résiduel de type MDI tout en maintenant une viscosité ainsi que des propriétés mécaniques satisfaisantes.

### RESUME DE L'INVENTION

Un premier objet de la présente invention est défini par l'objet de la revendication 1, et concerne un polyuréthane à terminaisons XDI et à base de diisocyanate de diphénylméthylène ou à base d'un mélange de meta-xylylene diisocyanate et de diisocyanate de diphénylméthylène, ledit polyuréthane étant non solide à une température allant de 5 à 35°C, caractérisé en ce que le polyuréthane est obtenu à partir d'un ratio molaire XDI/(XDI+MDI) allant de 16 à 25% ou strictement supérieur à 50%.

Selon un mode de réalisation de l'invention, le polyuréthane à terminaisons XDI est susceptible d'être obtenu par une réaction de polyaddition d'au moins une composition de polyol(s) avec au moins une composition de polyisocyanate(s), dans des conditions anhydres, dans des quantités de polyisocyanate(s) et de polyol(s) conduisant à un rapport molaire NCO/OH allant de 1,6 à 2,5.

De préférence, la composition de polyol(s) est un mélange de polyéther diol et de polyéther triol.

Selon un mode de réalisation de l'invention, le polyuréthane à terminaisons XDI est à base de diisocyanate de diphénylméthylène et à terminaison méta-xylylene diisocyanate.

Selon ce mode de réalisation, le polyuréthane à terminaisons XDI est susceptible d'être obtenu :
- par une première réaction de polyaddition d'au moins une composition de polyol(s) avec au moins une composition de diisocyanate de diphénylméthylène, dans des conditions anhydres, dans des quantités de polyisocyanate(s) et de polyol(s) conduisant à un rapport molaire NCO/OH strictement inférieur à 1 afin d'obtenir un polyuréthane à terminaisons OH,
- suivi d'une seconde réaction de polyaddition du polyuréthane à terminaisons OH avec une composition de meta-xylylene diisocyanate, dans des conditions anhydres, dans des quantités de polyisocyanate(s) et de polyol(s) conduisant à un rapport molaire NCO/OH allant de 1,6 à 2,5.

Selon un mode de réalisation, le polyuréthane à terminaisons XDI selon l'invention est obtenu à partir d'un ratio molaire XDI/(XDI+MDI) allant de 16 à 25% ou de 55 à 95%, de préférence allant de 16 à 25%.

Un second objet de la présente invention concerne une composition de polyuréthane(s) comprenant au moins un polyuréthane selon l'invention et au moins des monomères résiduels meta-xylylene diisocyanate.

L'invention concerne également une composition comprenant :
- au moins un polyuréthane selon l'invention ou au moins une composition de polyuréthane(s) selon l'invention,
- au moins une charge, et
- au moins un catalyseur de réticulation.

Selon un mode de réalisation, la composition selon l'invention comprend :
- de 10 à 30% en poids d'au moins un polyuréthane selon l'invention ou au moins une composition de polyuréthane(s) selon l'invention,
- de 25 à 70% en poids d'au moins une charge,
- de 0,01 à 1% en poids d'au moins un catalyseur de réticulation,
les pourcentages en poids étant exprimés par rapport au poids total de ladite composition.

Selon un mode de réalisation de l'invention, la composition comprend moins de 0,1% en poids de monomères résiduels diisocyanate de diphénylméthylène et moins de 0,5% en poids de monomères résiduels méta-xylylene diisocyanate, les pourcentages en poids étant exprimés par rapport au poids total de ladite composition.

Selon un mode de réalisation de l'invention, la composition se présente sous forme anhydre.

La présente invention concerne également un article comprenant la composition selon l'invention dans un conditionnement hermétique à l'abri de l'air. De préférence, le conditionnement hermétique est un sac d'aluminium ou une cartouche d'aluminium.

La présente invention permet de fournir des compositions adhésives ou de mastic respectant les règlementations en vigueur. En particulier, la teneur en MDI résiduel et en XDI résiduel dans les compositions adhésives ou de mastic est inférieure aux limites réglementaires imposant l'étiquetage des produits contenant de plus grandes quantités de monomères MDI et/ou XDI résiduels.

Les compositions adhésives et/ou de mastic selon l'invention présentent des propriétés très similaires aux compositions adhésives et/ou de mastic comprenant un polyuréthane à base de MDI uniquement.

D'autres objets et caractéristiques de la présente invention apparaîtront plus clairement à la lecture de la description et des exemples.

### EXPOSE DETAILLE DES MODES DE REALISATION DE L'INVENTION

Dans la présente demande, en l'absence d'indication contraire :
- la viscosité est mesurée à température ambiante (23°C). La mesure de viscosité à 23°C peut se faire à l'aide d'un viscosimètre Brookfield selon la norme ISO 2555. Typiquement, la mesure réalisée à 23°C peut se faire à l'aide d'un viscosimètre Brookfield RVT, d'une aiguille adaptée au domaine de viscosité et à une vitesse de rotation de 20 tours par minute (tr/mn) ;
- les différents modes de réalisations des compositions selon l'invention, destinées à être utilisées comme compositions adhésives, de mastic et/ou de revêtement de surface, décrits dans la présente demande peuvent être combinés entre eux, dans la mesure où l'utilisation visée est la même (adhésif, mastic, ou revêtement de surface).

Dans ce qui suit :
- Un composé MDI désigne un diisocyanate de diphényl-méthylène pouvant être représenté par la formule suivante : 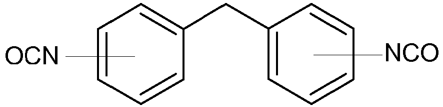 dans laquelle les fonctions NCO peuvent se trouver à différentes positions des cycles aromatiques.
- un composé XDI désigne un méta-xylylène diisocyanate pouvant être représenté par la formule suivante :

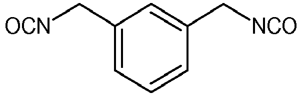

La présente invention concerne en premier lieu un polyuréthane à terminaisons XDI à base de diisocyanate de diphénylméthylène (MDI) ou à base d'un mélange de méta-xylylène diisocyanate (XDI) et de diisocyanate de diphénylméthylène (MDI), ledit polyuréthane étant non solide à une température allant de 5 à 35°C.

Le polyuréthane à terminaisons XDI selon l'invention est obtenu à partir de XDI et de MDI tel que le ratio molaire XDI/(XDI+MDI) exprimé en pourcentage va de 16% à 25% ou est strictement supérieur à 50%, de préférence va de 16 à 25%. Le ratio XDI/(XDI+MDI) est strictement inférieur à 100% puisque que le polyuréthane à terminaisons XDI est obtenu à partir de XDI et de MDI.

Selon un mode de réalisation de l'invention, le ratio molaire XDI/(XDI+MDI) exprimé en pourcentage va de 16% à 25% ou de 55% à 95%, de préférence de 16% à 25% ou de 60 à 90%, de préférence encore de 16% à 25% ou de 65% à 85%, voire de 16% à 25%.

Par « polyuréthane à terminaisons XDI », au sens de la présente invention, il faut comprendre un polyuréthane présentant en bout de chaîne, une fonction NCO (isocyanate) provenant de la réaction entre un composé XDI et un prépolymère polyuréthane préformé présentant des fonctions OH (hydroxyles) à ses extrémités. Le polyuréthane préformé à terminaisons OH sera désigné par l'expression « polyuréthane précurseur ». Cette terminaison isocyanate peut être représentée par la formule suivante : 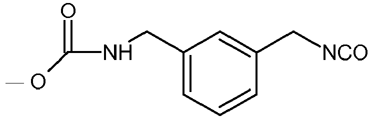 correspondant au motif issu de la réaction entre la fonction OH portée par le polyuréthane précurseur et l'une des fonctions NCO portée par le XDI.

Par « polyuréthane à terminaisons XDI et à base de MDI ou à base d'un mélange de MDI et de XDI », au sens de la présente invention, il faut comprendre un polyuréthane à terminaisons XDI tel que défini ci-dessus et présentant dans la chaîne, des motifs MDI ou à la fois des motifs MDI et XDI.

Le polyuréthane à terminaisons XDI selon l'invention est non thermofusible, c'est-à-dire qu'il n'est pas solide à une température allant de 5 à 35°C, et notamment à température ambiante (23°C). En particulier, il présente une viscosité mesurée à 23°C, inférieure ou égale à 300000 mPa.s, de préférence inférieure ou égale à 250000 mPa.s, plus préférentiellement allant de 100 à 200000 mPa.s., et mieux encore allant de 4000 à 150000 mPa.s (millipascal.seconde). De tels polyuréthanes sont suffisamment fluides à une température allant de 5 à 35°C pour pouvoir être mis en œuvre aisément dans cette gamme de température à l'aide de dispositifs d'application et/ou de mélange habituellement employés dans le domaine des adhésifs, mastics et/ou revêtement, tel qu'illustré notamment dans les exemples de la présente demande.

Le polyuréthane à terminaisons XDI selon l'invention est susceptible d'être obtenu par au moins une réaction de polyaddition d'au moins une composition de polyol(s) avec au moins une composition de polyisocyanate(s), dans des conditions anhydres, avec ou sans catalyseur de réaction, dans des quantités de polyisocyanate(s) et de polyol(s) conduisant à un rapport molaire NCO/OH noté r1 allant de 1,6 à 2,5.

La ou les réactions de polyaddition peuvent être mises en œuvre à une température inférieure à 95°C, de préférence allant de 65°C à 90°C, plus préférentiellement de 80 à 85°C.

Les quantités pondérales des réactifs à charger dans le réacteur pour synthétiser le polyuréthane à terminaisons XDI selon l'invention, sont déterminées sur la base du rapport r1, ainsi que, s'agissant des polyols, sur la base de leur masse molaire moyenne en nombre (exprimé en g/mol) et leur fonctionnalité hydroxyle (IOH exprimé en mg de KOH par gramme), ou s'agissant des polyisocyanates, sur la base de leur teneur en groupe isocyanate (%NCO exprimé en pourcentage en poids par rapport au poids de polyisocyanate).

La composition de polyisocyanate(s) sus-citée peut être constituée de MDI seul ou constituée d'un mélange de MDI et de XDI, ou encore le MDI ou le MDI et le XDI sus-cité peuvent être en mélange avec un ou plusieurs monomères polyisocyanates différents du MDI et du XDI. Ces monomères polyisocyanates peuvent être choisis parmi ceux habituellement utilisés dans la synthèse d'un polyuréthane à terminaisons NCO, et plus préférentiellement parmi le toluène diisocyanate (TDI), l'isophorone diisocyanate (IPDI), l'hexaméthylène diisocyanate (HDI).

Le MDI utilisé peut se présenter sous la forme d'un isomère ou d'un mélange d'isomères, tel que le 4,4'-MDI et/ou le 2,4'-MDI. De préférence, le MDI utilisé est constitué à au moins 90% en poids, et mieux encore d'au moins 95% en poids d'isomère 4,4'-MDI par rapport au poids total de MDI.

Selon un mode de réalisation, le polyuréthane à terminaisons XDI selon l'invention est à base d'un mélange de XDI et de MDI. Dans ce cas, le polyuréthane est susceptible d'être obtenu à partir d'une composition de polyisocyanate(s) constituée de XDI et MDI, éventuellement en mélange avec un ou plusieurs autres monomères polyisocyanates différents du MDI et du XDI.

Selon un autre mode de réalisation, le polyuréthane à terminaisons XDI selon l'invention est à base de MDI. Dans ce cas, le polyuréthane est susceptible d'être obtenu par un procédé en une ou deux étapes.

Dans le cas d'un procédé en une étape, le polyuréthane est susceptible d'être obtenu à partir d'une composition de polyisocyanates constituée de XDI et MDI, éventuellement en mélange avec un ou plusieurs autres monomères polyisocyanates différents du MDI et du XDI. En effet, le MDI est beaucoup plus réactif que le XDI, de sorte que le MDI réagira en premier avec la composition de polyol(s) alors que le XDI réagira en dernier, après disparition des monomères MDI résiduel afin d'obtenir le polyuréthane à terminaisons XDI selon l'invention.

Dans le cas d'un procédé en deux étapes, le polyuréthane selon l'invention est susceptible d'être obtenu par :
- une première réaction de polyaddition d'au moins une composition de polyol(s) avec au moins une composition de MDI, dans des conditions anhydres, dans des quantités de polyisocyanate(s) et de polyol(s) conduisant à un rapport molaire NCO/OH strictement inférieur à 1 afin d'obtenir un polyuréthane à terminaisons OH (polyuréthane précurseur),
- suivi d'une seconde réaction de polyaddition du polyuréthane à terminaisons OH avec une composition de XDI, dans des conditions anhydres, dans des quantités de polyisocyanate(s) et de polyol(s) conduisant à un rapport molaire NCO/OH allant de 1,6 à 2,5.

Selon ce dernier mode de réalisation, lors de la première étape, la composition de polyisocyanate(s) est de préférence constituée d'un ou plusieurs isomères du MDI et de préférence d'au moins 90% en poids, et mieux encore d'au moins 95% en poids de 4,4'-MDI par rapport au poids de la composition de polyisocyanate(s) utilisé dans la première étape.

Selon ce dernier mode de réalisation, lors de la seconde étape, la composition de XDI est de préférence constituée de méta-XDI (dénommé XDI dans la présente invention) éventuellement en combinaison avec du ortho-XDI et/ou du para-XDI. De préférence, la composition de XDI est constituée d'au moins 90% en poids, de préférence encore d'au moins 95% en poids et mieux encore d'au moins 98% en poids de méta-XDI par rapport au poids total de la composition de XDI utilisé dans la seconde étape.

Le polyuréthane à terminaisons XDI selon l'invention est obtenu à partir de XDI et de MDI tel que le ratio molaire XDI/(XDI+MDI) exprimé en pourcentage va de 16% à 25% ou est strictement supérieur à 50%, de préférence va de 16 à 25%. Le ratio XDI/(XDI+MDI) est strictement inférieur à 100% puisque que le polyuréthane à terminaisons XDI est obtenu à partir de XDI et de MDI.

Selon un mode de réalisation de l'invention, le ratio molaire XDI/(XDI+MDI) exprimé en pourcentage va de 16% à 25% ou de 55% à 95%, de préférence de 16% à 25% ou de 60 à 90%, de préférence encore de 16% à 25% ou de 65% à 85%, voire de 16% à 25%.

Ce ratio molaire est déterminé indépendamment du procédé de fabrication, que ce soit dans un procédé en une étape ou dans un procédé en deux étapes.

Selon l'un quelconque des modes de réalisation indiqués ci-dessus, la composition de polyol(s) peut être constituée d'un polyol ou d'un mélange de polyols. En particulier, le(s) polyol(s) utilisable(s) peu(ven)t être choisi(s) parmi ceux possédant une masse molaire moyenne en nombre allant de 1000 à 18000 g/mol, et plus particulièrement ceux possédant une masse molaire moyenne en nombre allant de 1000 à 8000 g/mol.

La composition de polyol(s) est constituée de préférence d'un ou plusieurs polyéthers, et plus préférentiellement d'au moins un polyéther triol.

Mieux encore, la composition de polyol(s) est un mélange de polyéther diol et triol, tel que le polypropylène glycol triol et le polypropylène glycol diol.

La composition de polyisocyanate(s) et la composition de polyol(s) utilisées dans le procédé de préparation du polyuréthane à terminaisons XDI selon l'invention sont choisis de préférence de manière à obtenir un polyuréthane à terminaisons XDI non thermofusible, présentant notamment une viscosité telle que décrite ci-dessus.

Le(s) catalyseur(s) de réaction utilisable(s) peu(ven)t être tout catalyseur connu par l'homme du métier pour catalyser la formation de polyuréthane par réaction d'au moins un polyisocyanate et d'au moins un polyol.

Le polyuréthane à terminaisons XDI selon l'invention peut se présenter sous la forme d'une composition de polyuréthane(s), pouvant éventuellement contenir un mélange de plusieurs polyuréthanes à terminaisons XDI. En particulier, ladite composition de polyuréthane(s) peut comprendre des monomères résiduels de MDI et/ou de XDI n'ayant pas réagi.

La teneur en polyuréthane à terminaisons XDI est de préférence d'au moins 95% en poids, plus préférentiellement d'au moins 97% en poids du poids total de la composition de polyuréthane(s) selon l'invention.

La teneur en monomère MDI dans la composition de polyuréthane selon l'invention est de préférence inférieure ou égale à 0,8% en poids, et plus préférentiellement inférieure ou égale à 0,5% en poids du poids total de la composition de polyuréthane selon l'invention.

La teneur en monomère XDI dans la composition de polyuréthane selon l'invention est de préférence inférieure ou égale à 4,0% en poids, et plus préférentiellement inférieure ou égale à 2,5% en poids du poids total de la composition de polyuréthane selon l'invention.

Le principe de la méthode d'analyse pour la détermination de la concentration en monomères diisocyanate résiduel (MDI ou XDI) repose sur la réaction spécifique du groupe isocyanate NCO avec une amine (1-(2-méthoxyphényl)pipérazine ou PPZ) pour former des dérivés stables d'urée. Ces dérivés sont obtenus lors de la préparation de l'échantillon à analyser par dilution/solubilisation de cet échantillon à l'aide d'une solution d'acétonitrile à 0,02 mol/L de PPZ. Les dérivés de PZZ formés à partir des isocyanates contenus dans l'échantillon à analyser sont ensuite dosés par un système de Chromatographie Liquide Haute Performance (CLHP) à phase inversée en C18 avec un gradient de phase mobile comprenant un mélange d'eau et d'acétonitrile tamponné à l'aide d'une solution aqueuse de tétrabutylammonium bisulfate à 0,2% en poids, à un pH allant de 2 à 3, muni d'un détecteur Ultra-Violet (UV) fonctionnant à 254nm. Ces composés sont identifiés et quantifiés en comparant leur temps de rétention et leur surface de pics chromatographiques avec ceux des dérivés PPZ étalons obtenus par réaction d'un monomère diisocyanate (MDI ou XDI) de nature et concentration connue.

L'échantillon à analyser peut être une composition de polyuréthane telle que décrite précédemment.

L'échantillon à analyser peut également être une composition adhésive, de mastic et/ou de revêtement de surface selon l'invention formulée à partir de ladite composition de polyuréthane.

Le polyuréthane selon l'invention ou la composition de polyuréthane selon l'invention tels que décrits ci-dessus, peuvent être utilisés pour fabriquer une composition adhésive, de mastic et/ou de revêtement de surface, notamment pour le domaine de la construction.

La présente demande a donc pour objet en second lieu une composition, utilisable en tant que composition adhésive, de mastic et/ou de revêtement de surface, comprenant :
- au moins un polyuréthane selon l'invention tel que décrit dans l'un quelconque des paragraphes précédents,
- au moins une charge,
- au moins un catalyseur de réticulation.

Selon un mode de réalisation de l'invention, la composition adhésive, de mastic et/ou de revêtement de surface comprend :
- de 10 à 30% en poids, de préférence de 15 à 20 % en poids, d'au moins un polyuréthane selon l'invention tel que décrit dans l'un quelconque des paragraphes précédents,
- de 25 à 70% en poids d'au moins une charge,
- de 0,01 à 1% en poids d'au moins un catalyseur de réticulation,
les pourcentages en poids étant exprimés par rapport au poids total de la composition adhésive, de mastic et/ou de revêtement de surface.

Les compositions adhésives, de mastic et/ou de revêtement de surface selon l'invention présentent l'avantage d'être stables en viscosité sur de longues durées de stockage (au moins 2-3 semaines, dans des conditions anhydres à 20-40°C) et sont de fait faciles à mettre en œuvre. En particulier, les compositions adhésives, de mastic et/ou de revêtement de surface selon l'invention présentent d'excellentes propriétés d'extrusion ou d'enduction à température ambiante au travers des dispositifs de mélange et/ou d'application de compositions de revêtement, de compositions adhésives ou de mastic conventionnels. Un exemple d'un tel dispositif d'application est décrit dans les exemples de la présente demande.

En outre, les compositions adhésives, de mastic et/ou de revêtement de surface selon l'invention possèdent notamment de bonnes propriétés mécaniques (notamment élasticité et module) adaptées à leur utilisation respective en tant qu'adhésif, revêtement de surface ou mastic. Avantageusement, ces propriétés ne sont pas dégradées après stockage.

De préférence, le choix des teneurs en ingrédients dans la composition adhésive, de mastic et/ou de revêtement de surface selon l'invention, et notamment de la teneur en composition de polyuréthane selon l'invention, est tel que ladite composition adhésive, de mastic et/ou de revêtement de surface comprend une teneur en monomère MDI inférieure à 0,1% en poids par rapport au poids total de la composition adhésive, de mastic et/ou de revêtement de surface et une teneur en XDI inférieure à 0,5% en poids par rapport au poids total de la composition adhésive, de mastic et/ou de revêtement de surface.

En réduisant la teneur en MDI en dessous de ce seuil, les compositions adhésive, de mastic et/ou de revêtement de surface selon l'invention présentent notamment des risques de toxicité réduites ou négligeables pour l'homme et son environnement.

La teneur en XDI dans la composition adhésive, de mastic et/ou de revêtement de surface selon l'invention est telle que ladite composition adhésive, de mastic et/ou de revêtement de surface présente des risques de toxicité réduites ou négligeables pour l'homme et son environnement.

Ainsi, selon un mode de réalisation préféré, la composition adhésive, de mastic et/ou de revêtement de surface peut comprendre par exemple :
- de 15 à 20% en poids par rapport au poids total de la composition adhésive, de mastic et/ou de revêtement de surface, du polyuréthane à terminaisons XDI selon l'invention,
- de 50 à 70% en poids d'au moins une charge, par rapport au poids total de la composition adhésive, de mastic et/ou de revêtement de surface,
- de 0,01 à 1% en poids d'au moins un catalyseur de réticulation, par rapport au poids total de la composition adhésive, de mastic et/ou de revêtement de surface,
- de 5 à 25% en poids d'au moins un agent rhéologique, par rapport au poids total de la composition adhésive, de mastic et/ou de revêtement de surface.

La composition adhésive, de mastic et/ou de revêtement de surface selon ce mode de réalisation préféré de l'invention comprend moins de 0,1% en poids de MDI et moins de 0,5% en poids de XDI, par rapport au poids total de ladite composition.

Selon un mode de réalisation, la composition adhésive, de mastic et/ou de revêtement de surface peut comprendre :
- de 15 à 20% en poids par rapport au poids total de la composition adhésive, de mastic et/ou de revêtement de surface, d'une composition de polyuréthane selon l'invention comprenant :
   a) au moins 98% en poids par rapport au poids de ladite composition de polyuréthane selon l'invention, d'au moins un polyuréthane non thermofusible à terminaisons XDI, telle que décrit dans l'un quelconque des paragraphes précédents,
   b) une teneur en monomère MDI inférieure à 0,5% en poids, par rapport au poids de ladite composition de polyuréthane selon l'invention,
   c) une teneur en monomère XDI inférieure à 2,5% en poids, par rapport au poids de ladite composition de polyuréthane selon l'invention,
- de 50 à 70% en poids d'au moins une charge, par rapport au poids total de la composition adhésive, de mastic et/ou de revêtement de surface,
- de 0,01 à 1% en poids d'au moins un catalyseur de réticulation, par rapport au poids total de la composition adhésive, de mastic et/ou de revêtement de surface,
- de 5 à 25% en poids d'au moins un agent rhéologique, par rapport au poids total de la composition adhésive, de mastic et/ou de revêtement de surface.

La composition adhésive, de mastic et/ou de revêtement de surface selon ce mode de réalisation plus préféré de l'invention comprend moins de 0,1% en poids de MDI et moins de 0,5% en poids de XDI, par rapport au poids total de ladite composition.

A titre de catalyseur(s) de réticulation utilisable(s) dans la composition adhésive, de mastic ou de revêtement de surface selon l'invention, on peut utiliser n'importe quel catalyseur(s) connu(s) par l'homme du métier pour catalyser la réticulation du polyuréthane à terminaisons NCO en présence d'eau (ou d'humidité). L'eau ou l'humidité peut être apportée par la surface du support ou le milieu environnant, de manière naturelle (humidité atmosphérique) ou contrôlée (par exemple, dans une chambre thermostatée à une humidité relative entre 40 et 70% à 23°C, ou un four allant jusqu'à 150°C) au contact de la composition selon l'invention. Cette réticulation se traduit par la création, entre les chaînes polymériques du polyuréthane, de liaisons de type urée qui conduisent à la formation d'un réseau polymérique tridimensionnel.

On peut utiliser par exemple un ou plusieurs catalyseurs de réticulation choisis parmi le dilaurate de dioctyl d'étain (DOTL), les catalyseurs à base de bismuth, ou encore les catalyseurs aminés tertiaires tels que :
- le 1,8-diazabicyclo[5.4.0]undec-7-ène (DBU) : 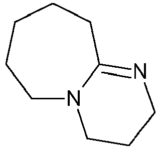
- le 1,5-diazabicyclo[4.3.0]non-5-ène (DBN) : 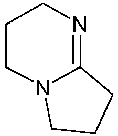
- l'éther diéthylique-2,2'-morpholine (DMDEE) : 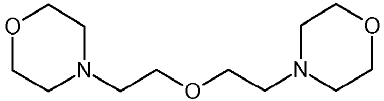
- le 1,4-diazabicyclo[2.2.2]octane (DABCO) :

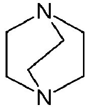

Ces catalyseurs de réticulation présentent l'avantage de ne pas être cancérogènes, mutagènes et reprotoxiques (CMR).

De préférence, la quantité de catalyseur de réticulation utilisable va de 0,05 à 0,5% en poids par rapport au poids de la composition adhésive, de mastic et/ou de revêtement de surface selon l'invention.

La (ou les) charge(s) utilisable(s) dans la composition adhésive, de mastic et/ou de revêtement de surface selon l'invention peu(ven)t être choisie(s) parmi les charges minérales et les mélanges de charges organiques et de charges minérales.

A titre d'exemple de charge(s) minérale(s) utilisable(s), on peut utiliser n'importe quelle(s) charge(s) minérale(s) habituellement utilisée(s) dans le domaine des compositions de revêtement de surface, de colle ou de mastic. Ces charges se présentent sous la forme de particules de géométrie diverse. Elles peuvent être par exemples sphériques, fibreuses, ou présenter une forme irrégulière.

De préférence, on utilise de l'argile, du quartz, des charges carbonatées.

Plus préférentiellement, on utilise des charges carbonatées, telles que les carbonates de métaux alcalin ou alcalino-terreux, et plus préférentiellement le carbonate de calcium ou la craie.

Ces charges peuvent être non traitée ou traitées, par exemple à l'aide d'un acide organique tel que l'acide stéarique, ou d'un mélange d'acides organiques constitué majoritairement d'acide stéarique.

On peut utiliser également des microsphères creuses minérales telles que des microsphères creuses de verre, et plus particulièrement celles en borosilicate de sodium et de calcium ou en aluminosilicate.

La quantité de charge minérale pouvant être utilisée peut notamment varier de 20 à 65% en poids, de préférence de 20 à 50% en poids, et plus préférentiellement de 25 à 40% en poids du poids de la composition adhésive, de mastic et/ou de revêtement de surface selon l'invention.

A titre d'exemple de charge(s) organique(s) utilisable(s), on peut utiliser n'importe quelle(s) charge(s) organique(s) et notamment polymérique(s) habituellement utilisée(s) dans le domaine des compositions de revêtement de surface, de colle ou de mastic

On peut utiliser par exemple du polychlorure de vinyle (PVC), des polyoléfines, du caoutchouc, de l'éthylène vinyl acétate (EVA), des fibres aramides telles que le Kevlar^{®}.

On peut utiliser également des microsphères creuses en polymère thermoplastique expansibles ou non expansibles. On peut notamment citer des microsphères creuses en chlorure de vinylidène/acrylonitrile.

De préférence, on utilise du PVC.

La taille moyenne de particule de la (des) charge(s) utilisable(s) est de préférence inférieure ou égale à 10 microns, plus préférentiellement inférieure ou égale à 3 microns, afin d'éviter leur sédimentation dans la composition adhésive, de mastic et/ou de revêtement de surface selon l'invention au cours de son stockage.

La taille moyenne de particule est mesurée pour une distribution granulométrique en volume et correspondant à 50% en volume de l'échantillon de particules analysé. Lorsque les particules sont sphériques, la taille moyenne de particule correspond au diamètre médian (D50 ou Dv50) qui correspond au diamètre tel que 50% des particules en volume ont une taille inférieure audit diamètre. Dans la présente demande, cette valeur est exprimée en micromètres et déterminée selon la Norme NF ISO 13320-1 (1999) par diffraction laser sur un appareil de type MALVERN.

La composition adhésive, de mastic et/ou de revêtement de surface selon l'invention peut comprendre au moins un agent plastifiant à raison de 5 à 20% en poids, de préférence de 10 à 15% en poids du poids de la composition adhésive, de mastic et/ou de revêtement de surface selon l'invention.

A titre d'exemple d'agent plastifiant utilisable, on peut utiliser n'importe quel agent plastifiant habituellement utilisé dans le domaine des compositions adhésives, de mastic et/ou de revêtement de surface.

De préférence, on utilise :
- le diisodecyl phtalate (DIDP)
- un ester d'acide alkylsulphonique et de phénol, tel que commercialisé sous le nom Mesamoll^{®} par la société Lanxess
- le diisononyl-1,2-cyclohexanedicarboxylate, tel que commercialisé sous le nom Hexamoll Dinch^{®} par la société BASF.

La composition adhésive, de mastic et/ou de revêtement de surface selon l'invention peut comprendre au moins un agent de rhéologie.

A titre d'exemple d'agent(s) de rhéologie utilisable(s), on peut citer n'importe quel agent de rhéologie habituellement utilisé dans le domaine des compositions adhésives, de mastic et/ou de revêtement de surface.

De préférence, on utilise un ou plusieurs agents de rhéologie choisis parmi les agents thixotropiques, et plus préférentiellement parmi:
- les plastisols de PVC, correspondant à une suspension de PVC dans un agent plastifiant miscible avec le PVC, obtenue in situ par chauffage à des températures allant de 60°C à 80°C. Ces plastisols peuvent être ceux décrits notamment dans l'ouvrage « Polyurethane Sealants », Robert M. Evans, ISBN 087762-998-6,
- la silice pyrogénée,
- des dérivés d'urée issus de la réaction d'un monomère diisocyanate aromatique tel que le 4,4'-MDI avec une amine aliphatique telle que la butylamine. La préparation de tels dérivés d'urée est décrite notamment dans la demande FR 1 591 172.

La teneur totale en agent(s) de rhéologie(s) pouvant être utilisée peut varier de 1 à 40% en poids, de préférence de 5 à 30 % en poids, plus préférentiellement de 10 à 25% en poids du poids de la composition adhésive, de mastic et/ou de revêtement de surface selon l'invention.

De préférence, la composition adhésive, de mastic et/ou de revêtement de surface selon l'invention ne comprend pas de solvant organique hydrocarboné, tel que ceux ayant un point d'ébullition inférieur à 250°C à pression atmosphérique, tel que le xylène.

La composition selon l'invention peut comprendre au moins un adjuvant choisi parmi les promoteurs d'adhérence tels que les époxysilanes, les stabilisants UV (ou anti-oxydants), les pigments, les colorants, et leur mélange. Lorsque ces adjuvants sont présents dans la composition, la somme totale de leur teneur est de préférence inférieure ou égale à 15% en poids par rapport au poids total de la composition adhésive, de mastic et/ou de revêtement de surface selon l'invention.

Lorsque la composition selon l'invention est destinée à être utilisée en tant que composition adhésive, celle-ci peut comprendre au moins une résine tackifiante.

A titre d'exemple de résine(s) tackifiante(s) utilisable(s), on peut citer n'importe quelle résine tackifiante habituellement utilisée dans le domaine des compositions adhésives.

De préférence, on utilise celles possédant une masse molaire moyenne en poids (Mw) allant de 200 à 5000 g/mol et de préférence choisies parmi :
- (i) des colophanes d'origine naturelle ou chimiquement modifiées, telles que par exemple la colophane extraite de la gomme de pins, la colophane de bois extraite des racines de l'arbre et leurs dérivés hydrogénés, dimérisés, polymérisés ou estérifiés par des monoalcools ou des polyols comme le glycérol, le pentaérythritol ou le néopentylglycol;
- (ii) des résines obtenues par hydrogénation, polymérisation ou copolymérisation (avec un hydrocarbure aromatique) de mélanges d'hydrocarbures aliphatiques insaturés ayant environ 5, 9 ou 10 atomes de carbone issus de coupes pétrolières ;
- (iii) des résines terpéniques résultant généralement de la polymérisation d'hydrocarbures terpéniques comme par exemple le mono-terpène (ou pinène) en présence de catalyseurs de Friedel-Crafts, éventuellement modifiées par action de phénols ;
- (iv) des copolymères à base de terpènes naturels, par exemple le styrène/terpène, l'alpha-méthyl styrène/terpène et le vinyl toluène/terpène.

La résine tackifiante est choisie de manière à être compatible avec le polyuréthane à terminaisons NCO utilisé selon l'invention, c'est-à-dire de manière à ce que lorsqu'elle est mélangée dans les proportions massiques 10% / 90% avec ledit polyuréthane à terminaisons NCO, cela donne un mélange substantiellement homogène. En particulier, le mélange reste transparent (dans le spectre de la lumière visible - longueur d'onde allant de 380 à 780 nanomètre, mesuré dans le vide) et aucun(e) déphasage ou gélification totale ou partielle n'est observé(e) dans le mélange polyuréthane/résine.

La quantité totale de résine(s) tackifiante(s) pouvant être utilisée peut varier de 5 à 10% en poids du poids de la composition adhésive.

De préférence, la composition adhésive selon l'invention comprend :
- de 15 à 30% en poids d'un polyuréthane à terminaisons XDI selon l'invention tel que décrit dans l'un quelconque des paragraphes précédents,
- de 40 à 65% en poids d'au moins une charge carbonatée,
- de 0,01 à 1% en poids d'au moins un catalyseur de réticulation,
- de préférence moins de 0,1% en poids de monomère MDI,
- de préférence moins de 0,5% en poids de monomère XDI,
les pourcentages en poids étant exprimés par rapport au poids de la composition adhésive.

Lorsque la composition selon l'invention est destinée à être utilisée en tant que composition de mastic, celle-ci comprend de préférence :
- de 20 à 30% en poids de polyuréthane à terminaisons XDI selon l'invention tel que décrit dans l'un quelconque des paragraphes précédents,
- de 20 à 25% en poids d'au moins une charge carbonatée,
- de 10 à 20% en poids, de préférence de 15 à 20% en poids d'au moins une charge organique et/ou au moins un agent de rhéologie,
- de 0,01 à 1% en poids d'au moins un catalyseur de réticulation,
- de préférence moins de 0,1% en poids de monomère MDI,
- de préférence moins de 0,5% en poids de monomère XDI,
les pourcentages en poids étant exprimés par rapport au poids de la composition de mastic.

Lorsque la composition selon l'invention est destinée à être utilisée en tant que composition de revêtement de surface, celle-ci comprend de préférence :
- de 20 à 25% en poids de polyuréthane à terminaisons XDI selon l'invention tel que décrit précédemment,
- de 25 à 50% en poids d'au moins une charge carbonatée,
- de 0,01 à 1% en poids d'au moins un catalyseur de réticulation,
- de préférence moins de 0,1% en poids de monomère MDI,
- de préférence moins de 0,5% en poids de monomère XDI,
les pourcentages en poids étant exprimés par rapport au poids de la composition de revêtement de surface.

Les compositions adhésives, de mastic ou de revêtement de surface selon l'invention sont formulées de manière à être utilisables ou applicables à basse température (entre 5 et 35°C) et notamment à température ambiante (23°C).

De préférence, les compositions adhésives, de mastic ou de revêtement de surface se présentent sous forme anhydre.

La composition adhésive, de mastic et/ou de revêtement de surface selon l'invention stable dans le temps en terme de viscosité, est préparée par un procédé comprenant une étape dans laquelle le(s) ingrédient(s) éventuellement présent(s) dans ladite composition, est (sont) mélangé(s) à une composition de polyuréthane(s) non thermofusible(s) à terminaisons XDI, à une température inférieure ou égale à 50°C, de préférence allant de 5 à 45°C, et mieux encore allant de 20 à 30°C.

L'ajout et le mélange des ingrédients se font dans des conditions anhydres.

La composition adhésive, de mastic ou de revêtement de surface selon l'invention est de préférence stockée dans un environnement anhydre, par exemple dans un conditionnement hermétique où la composition adhésive, de mastic ou de revêtement de surface se trouve à l'abri de l'humidité et de préférence à l'abri de la lumière.

La présente invention concerne également un article ou packaging, prêt à l'emploi, comprenant la composition adhésive, de mastic ou de revêtement de surface selon l'invention dans un conditionnement hermétique à l'abri de l'air, en particulier à l'abri de l'humidité ambiante. De préférence, le conditionnement hermétique permet également de protéger la composition de la lumière. Par exemple, le conditionnement hermétique peut être un sac d'aluminium ou une cartouche d'aluminium.

La composition adhésive, de mastic ou de revêtement de surface peut être utilisée dans un procédé comprenant :
a) L'application de ladite composition sur une surface, et
b) L'humidification de ladite composition appliquée.

Alternativement, la composition adhésive, de mastic ou de revêtement de surface peut être utilisée dans un procédé comprenant :
a) L'humidification de la surface, et
b) L'application de ladite composition sur ladite surface humidifiée.

Dans le cas d'une composition de mastic, la surface peut être une surface de béton ou une surface métallique. Des exemples de surface sont indiqués dans la norme ISO 11600 (2002).

Les exemples suivants sont donnés à titre purement illustratif de l'invention et ne sauraient être interprétés pour en limiter la portée.

### EXEMPLES

### Préparation des polyuréthanes

Les polyuréthanes des exemples 1 à 5 selon l'invention et des exemples comparatifs A à D et de l'exemple 6 hors invention ont été préparés par mélange des ingrédients indiqués dans les tableaux 1 et 1bis à une température inférieure ou égale à 95°C dans des conditions anhydres. Les quantités indiquées dans les tableaux 1 et 1bis sont exprimées en pourcentage en poids par rapport au poids total de la composition de polyuréthane de chacun des exemples.

Lorsque le polyuréthane comprend à la fois des motifs MDI et des motifs XDI, le procédé est séquentiel, c'est-à-dire que le MDI et les polyols ont été introduits dans une première étape pour former un polyuréthane terminé OH, puis dans une seconde étape, le XDI a été introduit pour former le polyuréthane terminé NCO (par un motif XDI).

**Tableau 1 : polyuréthanes comparatifs**

| | A | B | c | D |
|---|---|---|---|---|
| PPG triol ayant une masse molaire moyenne en nombre de 4000 g/mol | 42 | 42,2 | 42,3 | 41 |
| PPG diol ayant une masse molaire moyenne en nombre de 2000 g/mol | 27,5 | 27,7 | 27,7 | 27 |
| 4,4'-MDI (%NCO = 33,6% en poids) | 14 | 11,9 | 10,68 | 11 |
| XDI (%NCO = 44,7% en poids) | 0 | 1,57 | 2,56 | 4,5 |
| Catalyseur (DOTL) | 0,0006 | 0,006 | 0,006 | 0,006 |
| Xylène | 16,5 | 16,6 | 16,6 | 16,6 |
| Rapport molaire NCO/OH | 1,9 | 1,9 | 1,9 | 2,0 |
| % en poids de NCO final | 2,1 | 2,1 | 2,2 | 3,0 |
| Ratio molaire XDI/(XDI+MDI) en % | 0 | 15,9 | 25,6 | 37,0 |
| Viscosité | 25000 | gel | gel | gel |

**Tableau 1bis : polyuréthanes 1 à 5 selon l'invention et polyuréthane 6 hors invention**

| | 1 | 2 | 3 | 4 | 5 | 6 |
|---|---|---|---|---|---|---|
| PPG triol ayant une masse molaire moyenne en nombre de 4000 g/mol | 41,8 | 41,7 | 41,4 | 41,9 | 42,5 | 42,5 |
| PPG diol ayant une masse molaire moyenne en nombre de 2000 g/mol | 27,4 | 27,4 | 27,2 | 27,5 | 27,9 | 27,9 |
| 4,4'-MDI (%NCO = 33,6% en poids) | 12,66 | 12,2 | 12,55 | 7,6 | 4,29 | 0 |
| XDI (%NCO = 44,7% en poids) | 1,70 | 2,1 | 2,51 | 6,35 | 8,6 | 12,87 |
| Catalyseur (DOTL) | 0,0006 | 0,0006 | 0,006 | 0,006 | 0,0006 | 0,0006 |
| Xylène | 16,6 | 16,6 | 16,6 | 16,6 | 16,7 | 16,7 |
| Rapport molaire NCO/OH | 1,9 | 2,0 | 2,0 | 2,1 | 2,0 | 2,1 |
| % en poids de NCO final | 2,4 | 2,5 | 2,6 | 2,7 | 2,66 | 2,98 |
| Ratio molaire XDI/(XDI+MDI) en % | 16,1 | 19,8 | 22,3 | 54,6 | 74,2 | 100 |
| Viscosité (J+5) | 56000 | 48000 | 50000 | 4960 | 40000 | 1600 |

Dans le tableau 1 ci-dessus :
- Le % en poids de NCO final correspond à la quantité de fonctions NCO dans le polyuréthane à la fin de la réaction de préparation du polyuréthane, exprimé par rapport au poids total de polyuréthane.
- La viscosité de la composition de polyuréthane est mesurée 5 jour après la fin de la réaction (J+5) à 23°C dans des conditions de stockage anhydres. La mesure de viscosité est réalisée à 23°C à l'aide d'un viscosimètre Brookfield RVT, avec une aiguille numéro 6 à une vitesse de rotation de 20 tours par minute (tr/min). La valeur mesurée est exprimée en millipascal seconde (mPa.s).

Les polyuréthanes A et 1 à 6 ont été caractérisés avant d'être formulés dans des compositions de mastic:
- La viscosité de la composition de polyuréthane est mesurée 1 jour après la fin de la réaction V(J+1) puis 7 jours après la fin de la réaction V(J+7) à 23°C dans des conditions de stockage anhydres. La mesure de viscosité est réalisée à 23°C à l'aide d'un viscosimètre Brookfield RVT, avec une aiguille numéro 6 à une vitesse de rotation de 20 tours par minute (tr/min). La valeur mesurée est exprimée en millipascal seconde (mPa.s),
- Le module 100% est mesuré selon la norme ISO 11600 (faisant référence notamment à la norme ISO 8339),
- L'élongation à la rupture est mesurée selon la norme NF ISO 37 (Mars 2012),
- Le module de rupture est mesuré selon la norme ISO 11600 (faisant référence notamment à la norme ISO 8339).

Les résultats de la caractérisation sont indiqués dans le tableau 2 ci-dessous.

**Tableau 2 : caractérisation des polyuréthanes**

| | A | 1 | 2 | 3 | 4 | 5 | 6 |
|---|---|---|---|---|---|---|---|
| V(J+1) | 8000 | | | 51000 | 3500 | 37000 | 1400 |
| V(J+7) | 20000 | 30000 | 48000 | 59000 | 4960 | 40000 | 1600 |
| Module 100% (MPa) | 1020 | 1110 | 1150 | 1250 | 1190 | 2170 | 2470 |
| Elongation rupture (%) | 310 | 290 | 310 | 354 | 340 | 320 | 276 |
| Module rupture (MPa) | 1890 | 1950 | 2100 | 2760 | 2430 | 3760 | 3870 |

D'autres essais ont été effectués : les polyuréthanes 1bis et 3bis ont été préparés à partir des mêmes ingrédients que les polyuréthanes 1 et 3 respectivement mais avec un procédé en une étape, c'est-à-dire que le 4,4'-MDI et le XDI sont introduits simultanément avec les polyols.

Les polyuréthanes 1bis et 3bis ont également été caractérisés. Les résultats sont présentés dans le tableau 2bis ci-dessous.

**Tableau 2bis : caractérisation des polyuréthanes 1bis et 3bis**

| | 1bis | 3bis |
|---|---|---|
| V(J+1) | | |
| V(J+7) | 30000 | 50000 |
| Module 100% | 1110 | 1200 |
| Elongation rupture | 290 | 340 |
| Module rupture | 1950 | 2600 |
| % en poids de NCO final | 2,1 | 2,6 |

Il a en outre été constaté que le taux de monomères résiduels MDI et XDI des compositions de polyuréthanes 1bis et 3bis est proche du taux de monomères résiduels MDI et XDI des compositions de polyuréthanes 1 et 3 respectivement.

### Préparation des compositions de mastic

Les exemples comparatifs B à D ayant formé un gel, ils n'ont pas pu être formulés dans des compositions de mastic.

Des compositions de mastic ont ensuite été formulées à partir des polyuréthanes A et 1 à 6 qui ont été préparés conformément au procédé ci-dessus.

Les compositions de mastic ont été obtenues par mélange des ingrédients suivants :
- 20% en poids du polyuréthane précédemment préparé,
- 15,5% en poids d'un plastifiant,
- 30% en poids de charge(s),
- 12% en poids de gel urée,
- 4,5% en poids de solvant,
- 16% en poids de PVC,
- 2% en poids d'autres additifs.

Les compositions de mastic formulées à partir de chaque polyuréthane ont été caractérisées comme reporté dans le tableau 3.

**Tableau 3 : caractérisation des compositions de mastic**

| | A | 1 | 2 | 3 | 4 | 5 | 6 |
|---|---|---|---|---|---|---|---|
| Temps de formation de peau (min) | 70 | 80 | 90 | 106 | 300 | 220 | 360 |
| Extrusion (g/min) | 163 | 210 | 236 | 273 | 845 | 125 | 1500 |
| Réticulation 24h (mm) | 4 | 4 | 4 | 3 | 3 | 3 | 3 |
| Module 100% Haltère (kPa) | 460 | 500 | 540 | 560 | 430 | 740 | 666 |
| Elongation à la rupture Haltère (%) | 946 | 846 | 811 | 818 | 774 | 718 | 710 |
| %MDI libre | 0,2 | 0,05 | 0,05 | 0,07 | < 0,01 | < 0,01 | < 0,01 |
| %XDI libre | | 0,10 | 0,12 | 0,16 | 0,29 | 0,30 | 0,36 |

Caractérisation :
- Le temps de formation de peau (« skinning time » en anglais) a été mesuré selon la norme ISO 291 à 23°C et 50% d'humidité relative,
- L'extrusion correspond à la quantité en gramme de mastic qui a pu être extrudée par minute, sous une pression du piston de 3 bars, à 23°C,
- La réticulation après 24h (« Cure 24h » en anglais) a été mesurée selon la norme ISO 291,
- Le module 100% Haltère a été mesuré selon la norme NF ISO 37 (Mars 2012) avec des éprouvettes haltères,
- L'élongation à la rupture Haltère a été mesuré selon la norme NF ISO 37 (Mars 2012) avec des éprouvettes haltères,
- Le %MDI libre correspond à la quantité de monomères MDI résiduels dans la composition de mastic exprimée en pourcentage massique par rapport au poids de la composition de mastic,
- Le %XDI libre correspond à la quantité de monomères XDI résiduels dans la composition de mastic exprimée en pourcentage en poids par rapport au poids de la composition de mastic.

Pour les compositions 4, 5 et 6, on constate que la quantité de monomères MDI résiduels est inférieure à la limite de détection de l'appareillage (0,01%).

La composition comparative A comprend un polyuréthane à base de MDI uniquement et on note que la quantité de monomères MDI résiduels est de 0,2%, ce qui est supérieur à la limite réglementaire imposant l'étiquetage des produits.

Les compositions 1 à 5 selon l'invention présentent des propriétés satisfaisantes pour les applications visées et de plus, elles présentent des teneurs en MDI et XDI résiduels en-deçà des limites réglementaires imposées pour l'étiquetage des produits.

En outre, on note que les compositions 1 à 3 présentent les propriétés les plus proches des propriétés de la composition comparative A.

Un polyuréthane à terminaisons XDI et à base de XDI (composition 6) présente un intérêt industriel limité puisque le coût du XDI est élevé.

## Revendications

1. Polyuréthane à terminaisons XDI représentées par la formule suivante : 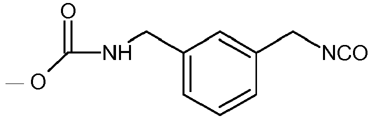 et à base de diisocyanate de diphénylméthylène (MDI) ou à base d'un mélange de meta-xylylene diisocyanate (XDI) et de diisocyanate de diphénylméthylène (MDI), ledit polyuréthane étant non solide à une température allant de 5 à 35°C, ledit polyuréthane étant tel que la fonction NCO dans ladite formule provient de la réaction entre un composé XDI et un prépolymère polyuréthane préformé à terminaisons OH, ledit polyuréthane étant **caractérisé en ce qu'**il est obtenu à partir de XDI et de MDI tel que le ratio molaire XDI/(XDI+MDI) va de 16 à 25% ou est strictement supérieur à 50%.

2. Polyuréthane selon la revendication 1, susceptible d'être obtenu par une réaction de polyaddition d'au moins une composition de polyol(s) avec au moins une composition de polyisocyanate(s), dans des conditions anhydres, dans des quantités de polyisocyanate(s) et de polyol(s) conduisant à un rapport molaire NCO/OH allant de 1,6 à 2,5.

3. Polyuréthane selon la revendication 2, **caractérisé en ce que** la composition de polyol(s) est un mélange de polyéther diol et de polyéther triol.

4. Polyuréthane selon la revendication 1 ou 3, **caractérisé en ce qu'**il est à base de diisocyanate de diphénylméthylène et à terminaison meta-xylylene diisocyanate.

5. Polyuréthane selon la revendication 4, susceptible d'être obtenu :
- par une première réaction de polyaddition d'au moins une composition de polyol(s) avec au moins une composition de diisocyanate de diphénylméthylène, dans des conditions anhydres, dans des quantités de polyisocyanate(s) et de polyol(s) conduisant à un rapport molaire NCO/OH strictement inférieur à 1 afin d'obtenir un polyuréthane à terminaisons OH,
- suivi d'une seconde réaction de polyaddition du polyuréthane à terminaisons OH avec une composition de meta-xylylene diisocyanate, dans des conditions anhydres, dans des quantités de polyisocyanate(s) et de polyol(s) conduisant à un rapport molaire NCO/OH allant de 1,6 à 2,5.

6. Polyuréthane selon l'une quelconque des revendications 1 à 5, obtenu à partir d'un ratio molaire XDI/(XDI+MDI) allant de 16 à 25% ou de 55% à 95%, de préférence allant de 16 à 25%.

7. Composition de polyuréthane(s) comprenant au moins un polyuréthane selon l'une quelconque des revendications 1 à 6 et au moins des monomères résiduels meta-xylylene diisocyanate.

8. Composition comprenant :
- au moins un polyuréthane selon l'une quelconque des revendications 1 à 6 ou au moins une composition de polyuréthane(s) selon la revendication 7,
- au moins une charge, et
- au moins un catalyseur de réticulation.

9. Composition selon la revendication 8, comprenant :
- de 10 à 30% en poids d'au moins un polyuréthane selon l'une quelconque des revendications 1 à 6 ou au moins une composition de polyuréthane(s) selon la revendication 7,
- de 25 à 70% en poids d'au moins une charge,
- de 0,01 à 1% en poids d'au moins un catalyseur de réticulation,
les pourcentages en poids étant exprimés par rapport au poids total de ladite composition.

10. Composition selon l'une des revendications 8 ou 9, comprenant moins de 0,1% en poids de monomères résiduels diisocyanate de diphénylméthylène et moins de 0,5% en poids de monomères résiduels meta-xylylene diisocyanate, les pourcentages en poids étant exprimés par rapport au poids total de ladite composition.

11. Composition selon l'une quelconque des revendications 8 à 10, se présentant sous forme anhydre.

12. Article comprenant la composition selon l'une des revendications 8 à 10 dans un conditionnement hermétique à l'abri de l'air.

13. Article selon la revendication 12, dans lequel le conditionnement hermétique est un sac d'aluminium ou une cartouche d'aluminium.

## Patentansprüche

1. Polyurethan mit XDI-Endgruppen, die durch die folgende Formel veranschaulicht sind: 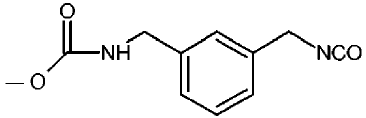 und auf der Basis von Diphenylmethylendiisocyanat (MDI) oder auf der Basis einer Mischung von meta-Xylylendiisocyanat (XDI) und Diphenylmethylendiisocyanat (MDI), wobei das Polyurethan bei einer Temperatur von 5 bis 35 °C nicht fest ist, das Polyurethan so ist, dass die NCO-Funktion in der Formel aus der Umsetzung zwischen einer XDI-Verbindung und einem vorgebildeten Polyurethan-Prepolymer mit OH-Endgruppen stammt, wobei das Polyurethan **dadurch gekennzeichnet ist, dass** es aus XDI und MDI so erhalten wird, dass das XDI/(XDI+MDI)-Stoffmengenverhältnis von 16 bis 25 % beträgt oder strikt größer als 50 % ist.

2. Polyurethan nach Anspruch 1, das durch eine Polyadditionsreaktion mindestens einer Zusammensetzung eines Polyols (von Polyolen) mit mindestens einer Zusammensetzung eines Polyisocyanats (von Polyisocyanaten) unter wasserfreien Bedingungen mit Mengen eines Polyisocyanats (von Polyisocyanaten) und eines Polyols (von Polyolen) erhältlich ist, die ein NCO/OH-Stoffmengenverhältnis von 1,6 bis 2,5 zur Folge haben.

3. Polyurethan nach Anspruch 2, **dadurch gekennzeichnet, dass** es sich bei der Mischung eines Polyols (von Polyolen) um eine Mischung eines Polyetherdiols und eines Polyethertriols handelt.

4. Polyurethan nach Anspruch 1 oder 3, **dadurch gekennzeichnet, dass** es auf Diphenylmethylendiisocyanat und mit meta-Xylylendiisocyanat-Endgruppen basiert.

5. Polyurethan nach Anspruch 4, das wie folgt erhältlich ist:
- durch eine erste Polyadditionsreaktion mindestens einer Zusammensetzung eines Polyols (von Polyolen) mit mindestens einer Diphenylmethylendiisocyanat-Zusammensetzung unter wasserfreien Bedingungen mit Mengen eines Polyisocyanats (von Polyisocyanaten) und eines Polyols (von Polyolen), die ein NCO/OH-Stoffmengenverhältnis strikt kleiner als 1 zur Folge haben, um ein Polyurethan mit OH-Endgruppen zu erhalten,
- gefolgt von einer zweiten Polyadditionsreaktion des Polyurethans mit OH-Endgruppen mit einer meta-Xylylendiisocyanat-Zusammensetzung unter wasserfreien Bedingungen mit Mengen eines Polyisocyanats (von Polyisocyanaten) und eines Polyols (von Polyolen), die ein NCO/OH-Stoffmengenverhältnis von 1,6 bis 2,5 zur Folge haben.

6. Polyurethan nach einem der Ansprüche 1 bis 5, das ausgehend von einem XDI/(XDI+MDI)-Stoffmengenverhältnis von 16 bis 25 % oder von 55 % bis 95 %, vorzugsweise von 16 bis 25 %, erhältlich ist.

7. Zusammensetzung eines Polyurethans (von Polyurethanen), die mindestens ein Polyurethan nach einem der Ansprüche 1 bis 6 und zumindest restliche meta-Xylylendiisocyanat-Monomere umfasst.

8. Zusammensetzung, die Folgendes umfasst:
- mindestens ein Polyurethan nach einem der Ansprüche 1 bis 6 oder mindestens eine Zusammensetzung eines Polyurethans (von Polyurethanen) nach Anspruch 7,
- mindestens ein Füllmittel und
- mindestens einen Vernetzungskatalysator.

9. Zusammensetzung nach Anspruch 8, die Folgendes umfasst:
- 10 bis 30 Gew.-% mindestens eines Polyurethans nach einem der Ansprüche 1 bis 6 oder mindestens eine Zusammensetzung eines Polyurethans (von Polyurethanen) nach Anspruch 7,
- 25 bis 70 Gew.-% mindestens eines Füllmittels,
- 0,01 bis 1 Gew.-% mindestens eines Vernetzungskatalysators,
wobei die Gewichtsprozentwerte bezogen auf das Gesamtgewicht der Zusammensetzung ausgedrückt sind.

10. Zusammensetzung nach einem der Ansprüche 8 oder 9, die weniger als 0,1 Gew.-% restliche Diphenylmethylendiisocyanat-Monomere und weniger als 0,5 Gew.-% restliche meta-Xylylendiisocyanat-Monomere umfasst, wobei die Gewichtsprozentwerte bezogen auf das Gesamtgewicht der Zusammensetzung ausgedrückt sind.

11. Zusammensetzung nach einem der Ansprüche 8 bis 10, die in wasserfreier Form vorliegt.

12. Artikel, der die Zusammensetzung nach einem der Ansprüche 8 bis 10 in einer luftdichten hermetischen Verpackung umfasst.

13. Artikel nach Anspruch 12, wobei es sich bei der hermetischen Verpackung um einen Aluminiumbeutel oder eine Aluminiumkartusche handelt.

## Claims

1. An XDI-terminated polyurethane represented by the following formula: 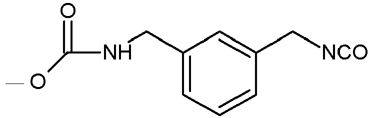 and based on methylene diphenyl diisocyanate (MDI) or based on a mixture of meta-xylylene diisocyanate (XDI) and methylene diphenyl diisocyanate (MDI), said polyurethane not being solid at a temperature ranging from 5°C to 35°C, said polyurethane being such that the NCO function in said formula originates from the reaction between an XDI compound and an OH-terminated preformed polyurethane prepolymer, said polyurethane being **characterized in that** it is obtained from XDI and MDI such that the XDI/(XDI+MDI) molar ratio ranges from 16% to 25% or is strictly greater than 50%.

2. The polyurethane as claimed in claim 1, capable of being obtained by a polyaddition reaction of at least one polyol composition with at least one polyisocyanate composition, under anhydrous conditions, in amounts of polyisocyanate(s) and of polyol(s) leading to an NCO/OH molar ratio ranging from 1.6 to 2.5.

3. The polyurethane as claimed in claim 2, **characterized in that** the polyol composition is a mixture of polyether diol and of polyether triol.

4. The polyurethane as claimed in claim 1 or 3, **characterized in that** it is based on methylene diphenyl diisocyanate and is meta-xylylene diisocyanate-terminated.

5. The polyurethane as claimed in claim 4, capable of being obtained:
- by a first polyaddition reaction of at least one polyol composition with at least one methylene diphenyl diisocyanate composition, under anhydrous conditions, in amounts of polyisocyanate(s) and of polyol(s) leading to an NCO/OH molar ratio strictly less than 1 in order to obtain an OH-terminated polyurethane,
- followed by a second polyaddition reaction of the OH-terminated polyurethane with a meta-xylylene diisocyanate composition, under anhydrous conditions, in amounts of polyisocyanate(s) and of polyol(s) leading to an NCO/OH molar ratio ranging from 1.6 to 2.5.

6. The polyurethane as claimed in any one of claims 1 to 5, obtained using an XDI/(XDI+MDI) molar ratio ranging from 16% to 25% or 55% to 95%, preferably ranging from 16% to 25%.

7. A polyurethane composition comprising at least one polyurethane as claimed in any one of claims 1 to 6 and at least some residual meta-xylylene diisocyanate monomers.

8. A composition comprising:
- at least one polyurethane as claimed in any one of claims 1 to 6 or at least one polyurethane composition as claimed in claim 7,
- at least one filler, and
- at least one crosslinking catalyst.

9. The composition as claimed in claim 8, comprising:
- from 10% to 30% by weight of at least one polyurethane as claimed in any one of claims 1 to 6 or at least one polyurethane composition as claimed in claim 7,
- from 25% to 70% by weight of at least one filler,
- from 0.01% to 1% by weight of at least one crosslinking catalyst,
the percentages by weight being expressed relative to the total weight of said composition.

10. The composition as claimed in either of claims 8 and 9, comprising less than 0.1% by weight of residual methylene diphenyl diisocyanate monomers and less than 0.5% by weight of residual meta-xylylene diisocyanate monomers, the percentages by weight being expressed relative to the total weight of said composition.

11. The composition as claimed in any one of claims 8 to 10, which is in anhydrous form.

12. An article comprising the composition as claimed in one of claims 8 to 10 in airtight hermetic packaging.

13. The article as claimed in claim 12, wherein the hermetic packaging is an aluminum bag or an aluminum cartridge.
